# EUROPÄISCHE PATENTSCHRIFT

(11) **EP 1 366 984 B1**
(45) Veröffentlichungstag und Bekanntmachung des Hinweises auf die Patenterteilung: **20.04.2011**
(21) Anmeldenummer: 03011252.8
(22) Anmeldetag: 16.05.2003
(51) Int. Cl.: B63H 21/30, B63G 8/34, B63G 13/02, F16F 15/00

(54) **Schwingungsdämpfungsvorrichtung für Antriebsaggregate von Schiffsantriebsanlagen von Über- und Unterwasserschiffen**
Vibration isolation arrangement for the propulsion plants of surface ships and submarines
Dispositif d'amortissement des vibrations pour installations de propulsion de bateaux de surface et de sous-marins

(30) Priorität: 29.05.2002 DE 10223965
(43) Veröffentlichungstag der Anmeldung: 03.12.2003
(73) Patentinhaber: SIEMENS AKTIENGESELLSCHAFT, 80333 München (DE)
(72) Erfinder: Bechtold, Mario, 91334 Hemhofen (DE); Schulze, Matthias, 21335 Lüneburg (DE)

(56) Entgegenhaltungen:
- EP-A- 0 350 333
- EP-A- 1 010 614
- DE-A- 3 519 103
- DE-A- 3 539 743
- DE-A- 10 039 763
- FR-A- 2 677 415
- FR-A- 2 761 437
- US-A- 2 964 272
- US-A- 5 130 948
- US-A- 5 826 864
- US-B1- 6 191 519

## Beschreibung

Die Erfindung bezieht sich auf eine Schwingungsdämpfungsvorrichtung für Antriebsaggregate von Schiffsantriebsanlagen von Über- und Unterwasserschiffen, mit Schockdämpfungselementen, die in Lagerungen des Antriebsaggregats integriert sind.

Sowohl im militärischen als auch im zivilen Schiffbau besteht ein hohes Interesse an möglichst leisen, geräuscharmen Schiffsantriebsanlagen, d.h. an Antriebsaggregaten, die möglichst wenig Vibrationen und Körperschall auf die Außenhaut des Schiffes übertragen. Im Falle beispielsweise von Fahrgast- bzw. Kreuzfahrtschiffen bedeuten derartige leise Antriebsaggregate einen erhöhten Komfort und angenehmeres Reisen für die Passagiere, wohingegen im Falle von Kriegsschiffen, z.B. U-Booten, derartig leise Antriebsaggregate zu einer erschwerten Ortbarkeit, einer besseren Tarnung und sich daraus ergebenden taktischen Vorteilen gegenüber einem Gegner führen.

Generell treten bei Schiffsantriebsanlagen Schwingungen von wenigen Hertz bis zu hochfrequenten Bereichen von einigen Kilohertz, d.h. ca. 10Hz bis hin zu 20kHz, auf. Diese Schwingungen werden durch Unwuchten im Antriebsaggregat, z.B. aufgrund plötzlicher Lastwechsel, und durch Schwingungen der Welle des Antriebsaggregats, was insbesondere zu Schwingungen im niedrigen Frequenzbereich führt, durch die Rotation und die Verdrängung von Luftmassen im Antriebsaggregat mit der Entstehung entsprechender Geräusche, was zu Schwingungen im mittleren Frequenzbereich führt, und durch den Betrieb von Leistungselektronikelementen, was zu Schwingungen im höheren Frequenzbereich führt, verursacht.

Die entstehenden Schwingungen weiten sich auf unterschiedliche Weise aus, nämlich über die Lagerung des Antriebsaggregats, über die Welle, über die Wellenlager und akustisch über die Luft, wobei die Hauptausbreitung dieser Schwingungen über die Lagerung des Antriebsaggregats erfolgt, da diese Lagerungsstellen Akustikbrücken zum Rumpf des Schiffes bilden.

Bei aus dem Stand der Technik bekannten Schwingungsdämpfungsvorrichtungen erfolgt die Geräuschreduzierung der Antriebsaggregate durch den Einbau der Schockdämpfungselemente. Es hat sich jedoch herausgestellt, dass diese Schockdämpfungselemente allein nicht in der Lage sind, die Übertragung von Schwingungen vom Antriebsaggregat auf den Schiffsrumpf zu unterbinden.

Das Dokument US 5130948, das als nächstliegender Stand der Technik angesehen wird, beschreibt eine Vorrichtung zum Dämpfen vor Schwingungen an Bord von U-Booten, die Sensor- und Aktorglieder zur Kompensierung der Schwingungen des gesamten Aggregates aufweist.

Der Erfindung liegt die Aufgabe zugrunde, die eingangs geschilderte Schwingungsdämpfungsvorrichtung derart weiterzubilden, dass in größerem Ausmaß als bisher die Weiterleitung von Schwingungen vom Antriebsaggregat auf den Schiffsrumpf unterbunden werden kann.

Diese Aufgabe wird erfindungsgemäß durch Körperschalldämpfungselemente gelöst, die in die Lagerungen des Antriebsaggregats integriert sind.

Diese Körperschalldämpfungselemente sind aus Aktor- und Sensorgliedern ausgebildet.

Zweckmäßigerweise sind die Aktorglieder der Körperschalldämpfungselemente mit einer Grundauslegung bzw. -einstellung versehen, die an die Grundschwingungen des Antriebsaggregats angepaßt ist. Diese Grundschwingungen des Antriebsaggregats können einer Analyse des Schwingungsverhaltens des Antriebsaggregats entstammen.

Mittels der Sensorglieder der Körperschalldämpfungselemente sind im Betrieb des Antriebsaggregats entstehende Schwingungen und Geräusche erfassbar, so dass mittels dieser Sensorglieder erfaßt werden kann, inwieweit es gelungen ist, durch die Grundeinstellung der Aktorglieder der Körperschalldämpfungselemente Schwingungen und Geräusche auszuschalten und zu eliminieren.

Die Sensorglieder der Körperschalldämpfungselemente können so ausgebildet sein, dass sie die Schwingungen und Geräusche des Antriebsaggregats kapazitiv, induktiv oder optisch detektieren.

Vorteilhaft weist die erfindungsgemäße Schwingungsdämpfungsvorrichtung eine Steuer- und Regeleinrichtung auf, mittels der entsprechend einem erfassten, die Grundschwingungen überlagernden Schwingungsverhalten und erfassten Geräuschen des Antriebsaggregats die Aktorglieder der Körperschalldämpfungselemente so ansteuerbar sind, dass sie dem erfassten, die Grundschwingungen überlagernden Schwingungsverhalten und den erfassten Geräuschen des Antriebsaggregats entgegenwirken.

Um generell eine maximale Festigkeit der Körperschalldämpfungselemente zu erreichen, ist es vorteilhaft, wenn die Aktor- und Sensorglieder mit Werkstoffen höherer Tragsteifigkeit zur Ausbildung der Körperschalldämpfungselemente kombiniert werden.

Vorteilhaft sind die Aktor- und Sensorglieder der Körperschalldämpfungselemente aus piezokeramischen Materialien oder piezokeramischen Kompositmaterialien ausgebildet.

Die Sensorglieder der Körperschalldämpfungselemente können aus PIEZO-Kristallen ausgebildet sein, wobei alternativ eine Ausgestaltung als Magnete, DMS-Streifen oder induktive Weg- bzw. Beschleunigungsaufnehmer möglich ist.

Gemäß einer vorteilhaften Ausführungsform des Körperschalldämpfungselementes der erfindungsgemäßen Schwingungsdämpfungsvorrichtung sind die Aktor- und Sensorglieder der Körperschalldämpfungselemente als Schichtlagen aus PFK(Piezofaser-Komposite)- bzw. PZT-Werkstoffen ausgebildet, wobei zumindest zwischen der das Sensorglied ausbildenden Schichtlage aus PZT-Werkstoff und den dieser benachbarte Aktorglieder ausbildenden Schichtlagen aus PFK-Werkstoff Isolierschichtlagen angeordnet sind.

Die Schichtlagen der Körperschalldämpfungselemente sind zweckmäßigerweise mit einem Polymermaterial zu einem Verbund vergossen.

Von den Sensorgliedern der Körperschalldämpfungselemente erfaßte Schwingungen und Geräusche des Antriebsaggregats sind in Messsignale umsetzbar und als Messsignale an die Steuerund Regeleinrichtung weiterleitbar.

Vorteilhaft ist des Weiteren eine Steuereinheit des Antriebsaggregats mit der Steuer- und Regeleinrichtung der Aktorglieder der Körperschalldämpfungselemente verbunden, so dass elektrische Strom-, Spannungs- und Leistungssignale des Antriebsaggregats an die Steuer- und Regeleinrichtung weiterleitbar sind.

Die Lagerung des Antriebsaggregats kann eine Kapsel aufweisen, in der das Antriebsaggregat gehaltert bzw. gelagert ist und die ihrerseits mittels der Körperschalldämpfungselemente am Schiffs- bzw. Bootsrumpf gelagert ist.

Des Weiteren ist es möglich, die Steuer- und Regeleinrichtung an eine Sensoreinrichtung anzuschließen, mittels der Vibrationen an einer auswählbaren Seite eines Unterwasserschiffes erfassbar sind.

Mittels der erfindungsgemäßen Schwingungsdämpfungsvorrichtung soll erreicht werden, dass Geräusche aktiv kompensiert werden und Schockwirkungen abgefangen werden, um die Geräuschsignatur der Schiffsantriebsanlage, beispielsweise eines Permasynmotors eines U-Bootes, zu verbessern und zu minimieren.

Eine in der vorstehend beschriebenen Weise ausgebildete Schwingungsdämpfungsvorrichtung läßt sich gemäß einer vorteilhaften Ausführungsform der Erfindung in einen Podantrieb eines Schiffes integrieren, wobei die Körperschalldämpfungselemente der Schwingungsdämpfungsvorrichtung zwischen dem eigentlichen Antriebsaggregat und einem Gondelgehäuse des Podantriebs angeordnet werden.

Im Folgenden wird die Erfindung anhand von Ausführungsformen unter Bezugnahme auf die Zeichnung näher erläutert.

Es zeigen:
- FIG 1: Schichtlagen eines Körperschalldämpfungselements mit Sensor- und Aktorgliedern vor dem Vergießen mit einem Polymermaterial;
- FIG 2: ein Körperschalldämpfungselement nach dem Vergießen mit dem Polymermaterial;
- FIG 3: eine Prinzipdarstellung eines mit einer erfindungsgemäßen Schwingungsdämpfungsvorrichtung ausgerüsteten Antriebsaggregats;
- FIG 4: eine Prinzipdarstellung eines in einer Kapsel gehalterten, mit einer erfindungsgemäßen Schwingungsdämpfungsvorrichtung ausgerüsteten Antriebsaggregats;
- FIG 5: eine Prinzipdarstellung einer weiteren Ausführungsform der erfindungsgemäßen Schwingungsdämpfungsvorrichtung; und
- FIG 6: eine Prinzipdarstellung eines mit einer erfindungsgemäßen Schwingungsdämpfungsvorrichtung ausgerüsteten Podantriebs.

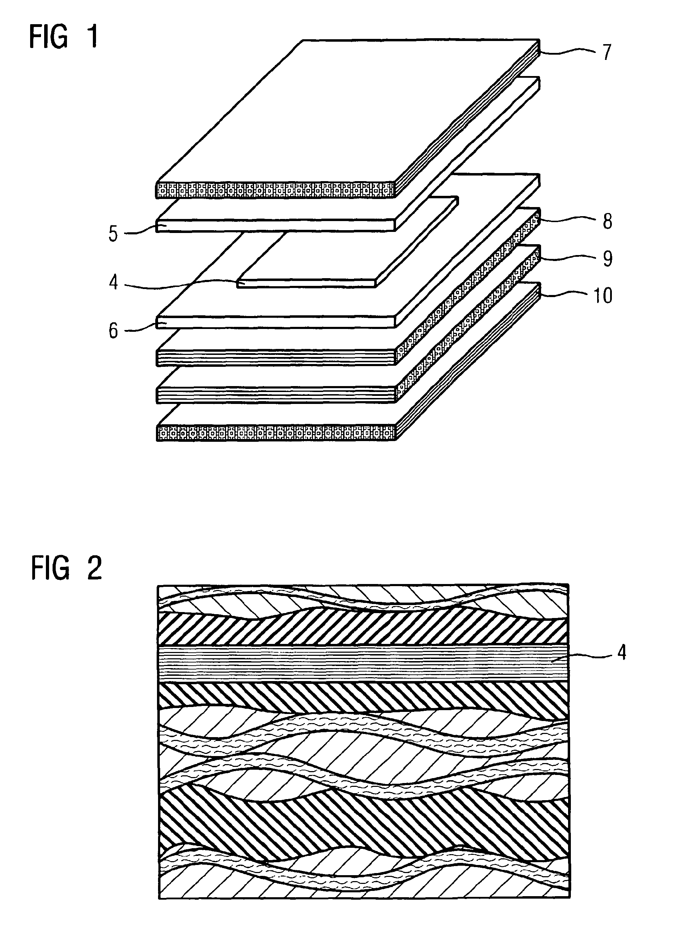

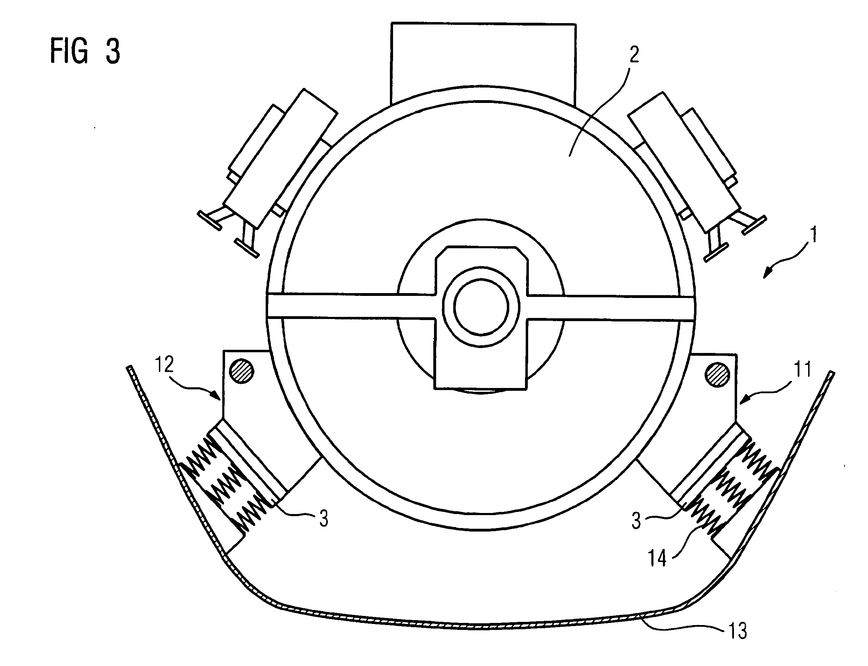

Wesentliche Bestandteile einer anhand der Figuren 3 bis 5 im Einzelnen dargestellten erfindungsgemäßen Schwingungsdämpfungsvorrichtung 1 für ein Antriebsaggregat 2 einer Schiffsantriebsanlage eines Über- oder Unterwasserschiffes sind Körperschalldämpfungselemente 3, die den in den Figuren 1 und 2 gezeigten Aufbau aufweisen.

Das Körperschalldämpfungselement 3, wie es in den Figuren 1 und 2 dargestellt ist, hat eine erste Schichtlage 4, die aus PIEZO-Kristallen ausgebildet ist und ein Sensorglied 4 des Körperschalldämpfungselements 3 bildet. Die das Sensorglied 4 bildende erste Schichtlage ist oben und unten von jeweils einer Isolierschichtlage 5, 6 umgeben. Des Weiteren hat das Körperschalldämpfungselement 3 vier PFK(Piezofaser-Komposite)-Schichtlagen 7, 8, 9, 10, welche Aktorglieder 7, 8, 9, 10 des Körperschalldämpfungselements 3 bilden. Figur 1 zeigt die Schichtlagen 4 bis 10 des Körperschalldämpfungselements 3 in dem Zustand vor dem Vergießen mit einem Polymermaterial, wohingegen in Figur 2 die das Körperschalldämpfungselement 3 ausbildenden Schichtlagen 4 bis 10 nach dem Vergießen mit dem Polymermaterial gezeigt sind. Die erste bzw. PZT-Schichtlage 4, die das Sensorglied 4 des Körperschalldämpfungselements 3 bildet, ist in der dargestellten Ausführungsform des Körperschalldämpfungselements 3 oberhalb dreier PFK-Schichtlagen vorgesehen.

Das Polymermaterial dient im wesentlichen dazu, das Körperschalldämpfungselement mit einer erhöhten Tragsteifigkeit zu versehen.

Die Aktorglieder 7 bis 10 sowie das Sensorglied 4 des Körperschalldämpfungselements 3 sind aus piezokeramischen Kompositmaterialien hergestellt, die auch unter der Bezeichnung "Smart Materials" bekannt sind.

Bei der Ausführungsform der erfindungsgemäßen Schwingungsdämpfungsvorrichtung 1 ist das als Permasynmotor ausgebildete Antriebsaggregat 2 über Lagerungen 11, 12 an einer Bordwand bzw. einem Schiffs- oder Bootsrumpf 13 gelagert. In die beiden Lagerungen 11, 12 sind jeweils ein Schockdämpfungselement 14 sowie ein Körperschalldämpfungselement 3 integriert. Das Schockdämpfungselement 14 dient der Aufnahme mechanischer Stöße und dergleichen. Mittels des Körperschalldämpfungselements 3 soll verhindert werden, dass in spürbarem Ausmaß Geräusche, die beim Betrieb des Antriebsaggregats 2 bzw. des Permasynmotors zwangsläufig auftreten, über die Lagerungen 11, 12 zum Schiffs- bzw. Bootsrumpf 13 übertragen werden. Es soll mittels der Körperschalldämpfungselemente 3 verhindert werden, dass die Lagerungen 11, 12 als Akustikbrücken zum Boots- bzw. Schiffsrumpf 13 fungieren.

Wie bereits erwähnt, weisen die Körperschalldämpfungselemente 3 ein Sensorglied 4 sowie Aktorglieder 7, 8, 9, 10 auf.

Nach einer Analyse des Schwingungsverhaltens des Antriebsaggregats 2 erfolgt eine Voreinstellung der Aktorglieder 7, 8, 9, 10 des Körperschalldämpfungselements 3, um regelmäßige Grundschwingungen des Antriebsaggregats 2 auszuschalten und zu kompensieren. Im Betrieb des Antriebsaggregats 2 und der Schwingungsdämpfungsvorrichtung 1 erfolgt mittels des Sensorglieds 4 eine Überprüfung, ob und inwieweit durch die Voreinstellung der Aktorglieder 7, 8, 9, 10 erreicht wurde, im Betrieb des Antriebsaggregats 2 entstehende Schwingungen und Geräusche auszuschalten und zu eliminieren. Sofern unregelmäßige, die bei der Voreinstellung der Aktorglieder 7, 8, 9, 10 berücksichtigten Grundschwingungen überlagernde Erschütterungen entstehen, z.B. bei Drehzahländerungen oder beim Anfahren des Antriebsaggregats 2 aus dem Stillstand, werden diese Erschütterungen vom Sensorglied 4 des Körperschalldämpfungselements 3 detektiert; die Aktorglieder 7, 8, 9, 10 können dann gegenläufig angesteuert werden, wobei hierzu ein Regelkreis vorgesehen ist, so daß diese Erschütterungen minimiert bzw. ausgelöscht werden können.

Durch die Ausrüstung der erfindungsgemäßen Schwingungsdämpfungsvorrichtung 1 mit den Körperschalldämpfungselementen 3 können im Betrieb des Antriebsaggregats entstehende Geräusche aktiv kompensiert werden, wobei weiterhin Schockwirkungen etc. abgefangen werden können. Die Geräuschsignatur von Schiffsantrieben, die mit der erfindungsgemäßen Schwingungsdämpfungsvorrchtung 1 ausgerüstet sind, z.B. eines Permasynmotors in einem U-Boot, kann hierdurch erheblich verbessert bzw. minimiert werden.

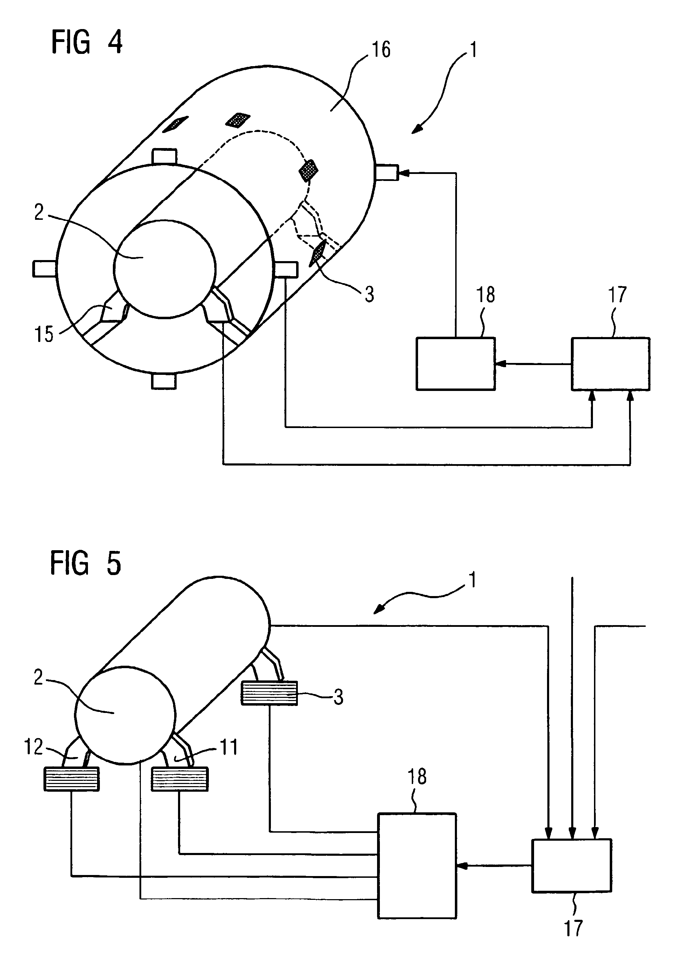

Bei der prinzipiell in Figur 4 gezeigten Ausführungsform der erfindungsgemäßen Schwingungsdämpfungsvorrichtung 1 ist der Motor mittels Lagerelementen 15 in einer Kapsel 16 gehaltert. Auf der Wandung der Kapsel 16 sind die Körperschalldämpfungselemente 3 mit ihrem Sensor- 4 und ihren Aktorgliedern 7, 8, 9, 10 vorgesehen. Die Schwingungsdämpfung erfolgt bei dieser Ausführungsform über die Kapsel 16, was insoweit vorteilhaft ist, als die Kapsel 16 ein geometrisch einfach aufgebauter Körper ist. Zu der in Figur 4 gezeigten Schwingungsdämpfungsvorrichtung 1 gehört eine Steuer- und Regeleinrichtung 17, die von einer Steuereinheit des Antriebsaggregats 2 Strom-, Spannungs- und Leistungssignale erhält. Des Weiteren erhält die Steuer- und Regeleinrichtung 17 von den Sensorgliedern 4 der Körperschalldämpfungselemente 3 Messsignale, die den mittels der Sensorglieder 4 detektierten Geräuschen und Schwingungen entsprechen. In Abhängigkeit von den an sie angelegten Messsignalen kann die Steuer- und Regeleinrichtung 17 eine Leistungsstufe 18 so betreiben, dass die an die Leistungsstufe 18 angeschlossenen Aktorglieder 7, 8, 9, 10 der Körperschalldämpfungselemente 3 so angesteuert werden, dass sie den seitens der Sensorglieder 4 der Körperschalldämpfungselemente 3 ermittelten Schwingungen und Geräuschen entgegenwirken.

Bei der in Figur 5 gezeigten Ausführungsform sind die in den Lagerungen 11, 12 des Antriebsaggregats 2 vorgesehenen Körperschalldämpfungselemente 3 an die Steuer- und Regeleinrichtung 17 angeschlossen, so dass die Sensorglieder 4 der Körperschalldämpfungselemente 3 ihrerseits ermittelte Schwingungen und Geräusche an die Steuer- und Regeleinrichtung 17 weitergeben. Des Weiteren ist die Steuer- und Regeleinrichtung 17 an die Steuereinheit des Antriebsaggregats 2 angeschlossen, so dass der Steuer- und Regeleinrichtung 17 Strom-, Spannungs- und Leistungssignale des Antriebsaggregats 2 zur Verfügung stehen. Außerdem erhält die Steuer- und Regeleinrichtung 17 Vibrationssignale von einer Seite des U-Bootes, wobei diese Seite wählbar ist. Unter Berücksichtigung der von ihr erfassten Messsignale steuert die Steuer- und Regeleinrichtung 17 den Betrieb der Leistungsstufe 18, so dass - je nach Anforderungsprofil - die Aktorglieder 7, 8, 9, 10 der Körperschalldämpfungselemente 3, die in die Lagerungen 11, 12 des Antriebsaggregats 2 integriert sind, zur Schwingungs- und Geräuschminderung eingesetzt werden können.

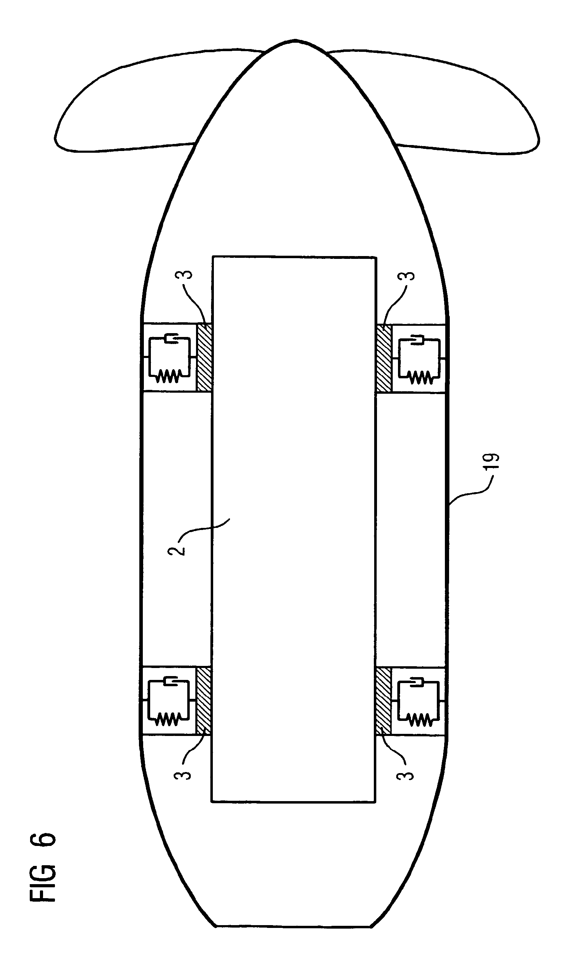

Bei einem, in Figur 6 im Prinzip dargestellten, Podantrieb eines Schiffes ist das eigentliche Antriebsaggregat 2 innerhalb eines Gondelgehäuses 19 des Podantriebs untergebracht. Zwischen dem Antriebsaggregat 2 und der Innenseite des Gondelgehäuses 19 sind die Körperschalldämpfungselemente 3 der Schwingungsdämpfungsvorrichtung angeordnet.

## Patentansprüche

1. Schwingungsdämpfungsvorrichtung für Elektromotoren (2) von Schiffsantriebsanlagen von Über- und Unterwasserschiffen,
- wobei die Schiffsantriebsanlagen Elektromotoren auf Schockdämpfungselementen (14) aufweisen, die in Lagerungen (11, 12; 15, 16) der Elektromotoren (2) integriert sind,
- wobei zusätzlich Körperschalldämpfungselemente (3) vorhanden sind, die in die Lagerungen (11, 12; 15, 16) des Antriebsaggregats (2) integriert sind und
- wobei die Körperschalldämpfungselemente (3) mit Aktor- (7, 8, 9, 10) und Sensorgliedern (4) ausgebildet sind und
- wobei mittels der Sensorglieder (4) der Körperschalldämpfungselemente (3) im Betrieb des Elektromotors (2) entstehende Schwingungen und Geräusche erfassbar sind
- und mit einer Steuer- und Regeleinrichtung (17), mittels der entsprechend einem erfassten, die Grundschwingungen überlagernden Schwingungsverhalten und von erfassten Geräuschen des Elektromotors (2) die Aktorglieder (7, 8, 9, 10) der Körperschalldämpfungselemente (3) so ansteuerbar sind,
- dass sie dem erfassten, die Grundschwingungen überlagernden Schwingungsverhalten und den erfassten Geräuschen des Elektromotors (2) entgegenwirken und
- wobei eine Steuereinheit des Antriebsaggregats (2) mit der Steuer- und Regeleinrichtung (17) der Aktorglieder (7, 8, 9, 10) der Körperschalldämpfungselemente (3) verbunden ist,
- so dass elektrische Strom-, Spannungs- und Leistungssignale des Elektromotors (2) an die Steuer- und Regeleinrichtung (17) weiterleitbar sind und
- wobei die Aktorglieder (7, 8, 9, 10) der Körperschalldämpfungselemente (3) eine Grundauslegung bzw. -einstellung aufweisen, die an die Grundschwingungen des Elektromotors (2) angepasst ist.

2. Schwingungsdämpfungsvorrichtung nach Anspruch 1, bei der die Aktor- (7, 8, 9, 10) und Sensorglieder (4) mit Werkstoffen höherer Tragsteifigkeit die Körperschalldämpfungselemente (3) bilden.

3. Schwingungsdämpfungsvorrichtung nach einem der Ansprüche 1 oder 2, bei der die Aktor- (7, 8, 9, 10) und Sensorglieder (4) der Körperschalldämpfungselemente (3) aus piezokeramischen Materialien oder piezokeramischen Kompositmaterialien ausgebildet sind.

4. Schwingungsdämpfungsvorrichtung nach einem der Ansprüche 1 bis 3, bei der die Sensorglieder (4) der Körperschalldämpfungselemente (3) als PIEZO-Kristalle ausgebildet sind.

5. Schwingungsdämpfungsvorrichtung nach einem der Ansprüche 1 bis 4, bei der die Aktor- (7, 8, 9, 10) und Sensorglieder (4) der Körperschalldämpfungselemente (3) als Schichtlagen (4, 7, 8, 9, 10) aus PFK- bzw. PZT-Werkstoffen ausgebildet sind, wobei zumindest zwischen der das Sensorglied (4) ausbildenden Schichtlage (4) aus PZT-Werkstoff und den dieser benachbarte Aktorglieder (7, 8) ausbildenden Schichtlagen (7, 8) aus PFK-Werkstoff Isolierschichtlagen (5, 6) angeordnet sind.

6. Schwingungsdämpfungsvorrichtung nach Anspruch 5, bei der die Schichtlagen (4 bis 10) der Körperschalldämpfungselemente (3) mit einem Polymermaterial zu einem Verbund vergossen sind.

7. Schwingungsdämpfungsvorrichtung nach einem der Ansprüche 1 bis 6, bei der von den Sensorgliedern (4) der Körperschalldämpfungselemente (3) erfassten Schwingungen und Geräusche des Antriebsaggregats (2) entsprechende Messsignale an die Steuer- und Regeleinrichtung (17) weiterleitbar sind.

8. Schwingungsdämpfungsvorrichtung nach einem der Ansprüche 1 bis 7, bei der die Lagerung (15) eine Kapsel (16) aufweist, in der der Elektromotor (2) gehaltert bzw. gelagert ist und die ihrerseits mittels der Körperschalldämpfungselemente (3) im Schiffs- bzw. Bootsrumpf (13) gelagert ist.

9. Schwingungsdämpfungsvorrichtung nach einem der Ansprüche 1 bis 8, bei der die Steuer- und Regeleinrichtung (17) an eine Sensoreinrichtung angeschlossen ist, mittels der Vibrationen an einer auswählbaren Seite eines Unterwasserschiffes erfassbar sind.

10. Schwingungsdämpfungsvorrichtung nach einem der Ansprüche 1 bis 9, deren Körperschalldämpfungselemente (3) zwischen dem Elektromotor (2) und einem Gondelgehäuse (19) eines POD-Antriebs angeordnet sind.

## Claims

1. Oscillation damping apparatus for electric motors (2) of marine-vessel propulsion installations of surface vessels and underwater vessels,
- wherein the marine propulsion installations have electric motors on shock-absorbing elements (14) which are integrated in bearings (11, 12; 15, 16) of the electric motors (2),
- wherein structure-borne sound damping elements (3) are also provided and are integrated in the bearings (11, 12; 15, 16) of the propulsion equipment (2), and
- wherein the structure-borne sound damping elements (3) have actuator elements (7, 8, 9, 10) and sensor elements (4), and
- wherein oscillations and noise which occur during operation of the electric motor (2) can be detected by means of the sensor elements (4) of the structure-borne sound damping elements (3),
- and having an open-loop and closed-loop control device (17), by means of which the actuator elements (7, 8, 9, 10) of the structure-borne sound damping elements (3) can be operated corresponding to a detected oscillation behaviour, which is superimposed on the fundamental oscillations, and noises detected from the electric motor (2), such that
- said actuator elements counteract the detected oscillation behaviour which is superimposed on the fundamental oscillations and the detected noise from the electric motor (2), and
- wherein a control unit of the propulsion equipment (2) is connected to the open-loop and closed-loop control device (17) of the actuator elements (7, 8, 9, 10) of the structure-borne sound damping elements (3),
- such that electrical current, voltage and power signals of the electric motor (2) can be passed to the open-loop and closed-loop control device (17), and
- wherein the actuator elements (7, 8, 9, 10) of the structure-borne sound damping elements (3) have a basic design and setting which are matched to the fundamental oscillations of the electric motor (2).

2. Oscillation damping apparatus according to Claim 1, wherein the actuator elements (7, 8, 9, 10) and sensor elements (4), with materials of relatively high supporting stiffness, form the structure-borne sound damping elements (3).

3. Oscillation damping apparatus according to one of Claims 1 or 2, in which the actuator elements (7, 8, 9, 10) and sensor elements (4) of the structure-borne sound damping elements (3) are formed from piezoceramic materials or piezoceramic composite materials.

4. Oscillation damping apparatus according to one of Claims 1 to 3, wherein the sensor elements (4) of the structure-borne sound damping elements (3) are in the form of piezo crystals.

5. Oscillation damping apparatus according to one of Claims 1 to 4, wherein the actuator elements (7, 8, 9, 10) and sensor elements (4) of the structure-borne sound damping elements (3) are in the form of layer strata (4, 7, 8, 9, 10) composed of PFC or PZT materials, wherein insulating layer strata (5, 6) are arranged at least between the layer stratum (4) which forms the sensor element (4) and is composed of PZT material and the layer strata (7, 8) which form the actuator elements adjacent to the latter (7, 8) and are composed of PFC material.

6. Oscillation damping apparatus according to Claim 5, in which the layer strata (4 to 10) of the structure-borne sound damping elements (3) are encapsulated with a polymer material to form an assembly.

7. Oscillation damping apparatus according to one of Claims 1 to 6, in which measurement signals which correspond to oscillations and noises from the propulsion equipment (2) detected by the sensor elements (4) of the structure-borne sound damping elements (3) can be passed on to the open-loop and closed-loop control device (17).

8. Oscillation damping apparatus according to one of Claims 1 to 7, in which the bearing (15) has a capsule (16) in which the electric motor (2) is held and borne, and which is itself borne by means of the structure-borne sound damping elements (3) in the marine vessel or boat hull (13).

9. Oscillation damping apparatus according to one of Claims 1 to 8, in which the open-loop and closed-loop control device (17) is connected to a sensor device, by means of which vibration can be detected on a selectable side of an underwater vessel.

10. Oscillation damping apparatus according to one of Claims 1 to 9, whose structure-borne sound damping elements (3) are arranged between the electric motor (2) and a pod housing (19) of a POD propulsion system.

## Revendications

1. Dispositif d'amortissement des vibrations pour des moteurs ( 2 ) électriques d'installations de propulsion de bateaux de surface et de sous-marins,
- dans lequel les installations de propulsion de bateaux ont des moteurs électriques sur des éléments ( 14 ) d'amortissement des chocs, qui sont intégrés dans des supports ( 11, 12 ; 15, 16 ) des moteurs ( 2 ) électriques,
- dans lequel il est prévu supplémentairement des éléments ( 3 ) d'amortissement du bruit transmis par les corps solides, qui sont intégrés dans les supports ( 11, 12 ; 15, 16 ) du groupe ( 2 ) de propulsion,
- dans lequel les éléments ( 3 ) d'amortissement du bruit transmis par les corps solides sont constitués en ayant des organes ( 7, 8, 9, 10 ) d'actionneur et des organes ( 4 ) de capteur,
- dans lequel des vibrations et des bruits se produisant, lorsque le moteur ( 2 ) électrique est en fonctionnement, peuvent être détectés au moyen des organes ( 4 ) de capteur des éléments ( 3 ) d'amortissement du bruit transmis par les corps solides,
- et comprenant un dispositif (17) de commande et de régulation, au moyen duquel les organes ( 7, 8, 9, 10 ) d'actionneur des éléments ( 3 ) d'amortissement des bruits transmis par les corps solides peuvent être commandés en fonction d'un comportement de vibration, détecté et se superposant à des vibrations fondamentales, et de bruits détectés du moteur ( 2 ) électrique, de manière
- à ce qu'il s'oppose au comportement de vibration détecté, se superposant aux vibrations de base, et aux bruits détectés du moteur ( 2 ) électrique et
- dans lequel une unité de commande du groupe ( 2 ) de propulsion est reliée au dispositif ( 17 ) de commande et de régulation des organes ( 7, 8, 9, 10 ) d'actionneur des éléments (3) d'amortissement du bruit transmis par les corps solides,
- de sorte que des signaux de courant, de tension et de puissance du moteur ( 2 ) électrique peuvent être acheminés au dispositif ( 17 ) de commande et de régulation et
- dans lequel les organes ( 7, 8, 9, 10 ) d'actionneur des éléments ( 3 ) d'amortissement du bruit transmis par les solides ont une conception ou un réglage de base, qui est adapté aux vibrations fondamentales du moteur (2) électrique.

2. Dispositif d'amortissement des vibrations suivant la revendication 1, dans lequel les organes ( 7, 8, 9, 10 ) d'actionneur et les organes (4) de capteur, ayant des matériaux d'une assez grande raideur de portée, forment les éléments ( 3 ) d'amortissement du bruit transmis par les corps solides.

3. Dispositif d'amortissement des vibrations suivant l'une des revendications 1 ou 2, dans lequel les organes ( 7, 8, 9, 10 ) d'actionneur et les organes (4) de capteur des éléments ( 3 ) d'amortissement du bruit transmis par les solides sont en des matériaux piézocéramiques ou en des matériaux composites piézocéramiques.

4. Dispositif d'amortissement des vibrations suivant l'une des revendications 1 à 3, dans lequel les organes ( 4 ) de capteur des éléments ( 3 ) d'amortissement du bruit transmis par les corps solides sont constitués sous la forme de cristaux piézo.

5. Dispositif d'amortissement des vibrations suivant l'une des revendications 1 à 4, dans lequel les organes ( 7, 8, 9, 10 ) d'actionneur et les organes (4) de capteur des éléments ( 3 ) d'amortissement du bruit transmis par les corps solides sont constitués sous la forme de strates ( 4, 7, 8, 9, 10 ) en matériau PKF ou en matériau PZT, des strates (5, 6 ) isolantes étant disposées au moins entre la strate (4 ) en matériau PZT formant l'organe ( 4 ) de détecteur et les strates (7, 8 ) en matériau PFK, voisines de celle-ci et formant les organes ( 7, 8 ) d'actionneur.

6. Dispositif d'amortissement des vibrations suivant la revendication 5, dans lequel les strates ( 4 à 10) des éléments ( 3 ) d'amortissement du bruit transmis par les corps solides sont coulées avec une matière polymère en un composite.

7. Dispositif d'amortissement des vibrations suivant l'une des revendications 1 à 6, dans lequel les signaux de mesure correspondants aux vibrations et aux bruits du groupe ( 2 ) de propulsion, détectés par les organes ( 4 ) de capteur des éléments ( 3 ) d'amortissement du bruit transmis par les corps solides, peuvent être acheminés au dispositif (17) de commande et de régulation.

8. Dispositif d'amortissement des vibrations suivant l'une des revendications 1 à 7, dans lequel le support ( 15 ) comporte une capsule ( 16 ), dans lequel le moteur ( 2 ) électrique est maintenu et monté et qui, de son côté, est montée dans la coque ( 13 ) du bateau ou du navire, au moyen des éléments ( 3 ) d'amortissement du bruit transmis par les corps solides.

9. Dispositif d'amortissement des vibrations suivant l'une des revendications 1 à 8, dans lequel le dispositif ( 17 ) de commande et de régulation est raccordé à un dispositif de capteur, au moyen duquel des vibrations peuvent être détectées sur un côté pouvant être sélectionné d'un sous-marin.

10. Dispositif d'amortissement des vibrations suivant l'une des revendications 1 à 9, dont les éléments ( 3 ) d'amortissement du bruit transmis par les corps solides sont disposés entre le moteur ( 2 ) électrique et un carter ( 19 ) de nacelle d'une propulsion POD.
